# EUROPÄISCHE PATENTSCHRIFT

(11) **EP 1 977 121 B1**
(45) Veröffentlichungstag und Bekanntmachung des Hinweises auf die Patenterteilung: **17.03.2010**
(21) Anmeldenummer: 06841121.4
(22) Anmeldetag: 22.12.2006
(51) Int. Cl.: F16B 37/04

(54) **STECKMUTTER**
PUSH NUT
ECROU MALE

(30) Priorität: 13.01.2006 DE 102006001741
(43) Veröffentlichungstag der Anmeldung: 08.10.2008
(73) Patentinhaber: A. RAYMOND ET CIE, 38000 Grenoble (FR)
(72) Erfinder: PAQUET, Jérôme, F-38000 Grenoble (FR)
(74) Vertreter: Rüttgers, Joachim
(86) Internationale Anmeldenummer: PCT/EP2006/012443
(87) Internationale Veröffentlichungsnummer: WO 2007/087884

(56) Entgegenhaltungen:
- DE-A1- 3 524 651
- US-A- 6 095 734

## Beschreibung

Die Erfindung betrifft eine Steckmutter gemäß dem Oberbegriff des Patentanspruches 1.

Eine derartige Steckmutter ist aus DE 35 24 651 A1 bekannt. Die vorbekannte, zum Einfügen in einer Ausnehmung eines Trägerteiles eingerichtete und aus einem gestanzten sowie gebogenen Blech hergestellte Steckmutter verfügt über eine Deckplatte, an der zwei einander gegenüberliegende und sich in einer Richtung weg von der Deckplatte erstreckende Schenkel angesetzt sind. Die Schenkel sind jeweils mit einem an der Deckplatte angesetzten Innenschenkel und mit einem an dem von der Deckplatte wegweisenden Ende des Innenschenkels angeformten, sich wieder in Richtung der Deckplatte erstreckenden Außenschenkel ausgebildet. Zwischen den Innenschenkeln ist ein Innenraum vorhanden. An den der Deckplatte zugewandten Enden der Außenschenkel sind in den Innenraum hineinragende Zungen angeformt. Die Deckplatte ist mit einem einen Gewindeabschnitt aufweisenden Mutterteil verbunden, wobei ein Schaft einer mit dem Mutterteil in Eingriff bringbaren Schraube in den Innenraum hineinragt, an dem die Stirnseiten der freien Enden der Zungen anliegen, so dass eine Bewegung der Außenschenkel in Richtung der Innenschenkel blockiert ist. Zwar weist diese Steckmutter eine hohe Auszugsfestigkeit auf, allerdings ist sie verhältnismäßig materialaufwändig ausgestaltet.

Aus US-A-6,095,734 ist eine Steckmutter mit zwei Schenkeln bekannt, bei der jeder Schenkel zwei außenseitig angeordnete Außenstreben aufweist, zwischen denen eine nach innen gerichtete Zunge ausgebildet ist.

Der Erfindung liegt die Aufgabe zugrunde, eine Steckmutter der eingangs genannten Art anzugeben, die mit einem relativ geringen Materialaufwand eine verhältnismäßig hohe Auszugsfestigkeit erzielt.

Diese Aufgabe wird bei einer Steckmutter der eingangs genannten Art erfindungsgemäß mit den kennzeichnenden Merkmalen des Patentanspruches 1 gelöst.

Dadurch, dass bei der erfindungsgemäßen, aus einem gestanzten und gebogenen Blech hergestellte Steckmutter die Schenkel mit ineinander liegenden Außenstreben, Innenstreben und jeweils einer die Bewegung des jeweiligen Schenkels nach innen blockierende Zunge ausgebildet sind, ist der Materialaufwand bei verhältnismäßig hoher Auszugsfestigkeit sehr gering gehalten, da sich die Schenkel jeweils aus lediglich einem relativ kleinflächigen Streifen eines Blechabschnittes fertigen lassen.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel einer erfindungsgemäßen Steckmutter und
- Fig. 2: in einem Längsschnitt das Ausführungsbeispiel gemäß Fig. 1 in einer in eine Ausnehmung eines Trägerteiles eingefügten Anordnung.

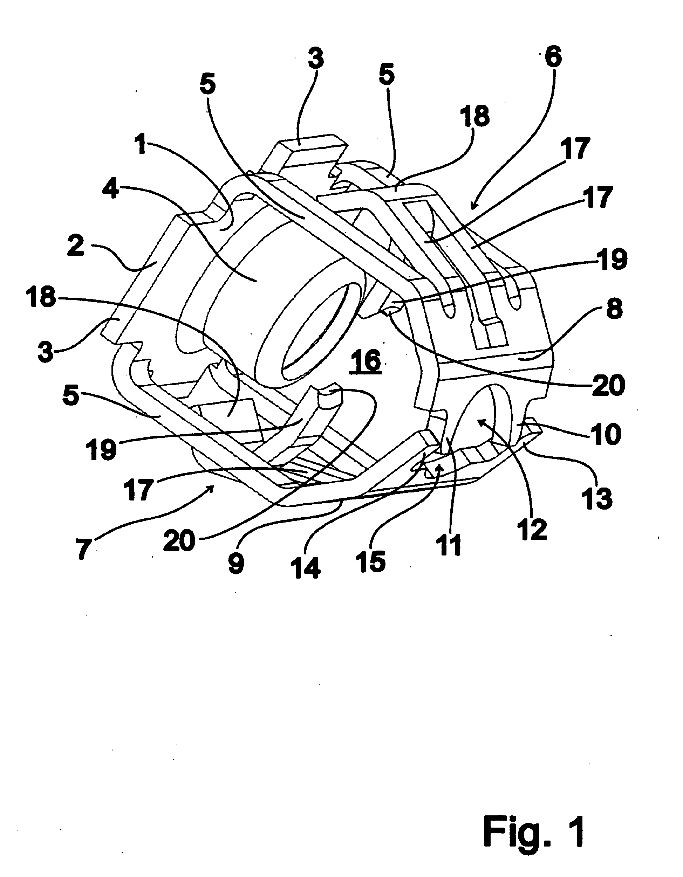

Fig. 1 zeigt in einer perspektivischen Ansicht ein Ausführungsbeispiel einer erfindungsgemäßen Steckmutter, die aus einem gestanzten sowie gebogenen Blechabschnitt hergestellt und zum Einfügen in eine Ausnehmung eines in Fig. 1 nicht dargestellten Trägerteiles vorgesehen ist. Die Steckmutter gemäß Fig. 1 verfügt über eine Deckplatte 1 mit einer im wesentlichen rechteckartigen Gestalt, an deren Randseiten jeweils einander paarweise gegenüberliegende lange Randzungen 2 und kurze Randzungen 3 ausgebildet sind. Die Randzungen 2, 3 stehen nach außen über und dienen dem Vergrößern der Auflagefläche der Deckplatte 1 um die Ausnehmung des Trägerteiles. In der Mitte der Deckplatte 1 ist als Mutterteil eine Gewindehülse 4 angeformt, die ein Innengewindeabschnitt als Gewindeabschnitt aufweist.

Bei Abwandlungen der erfindungsgemäßen Steckmutter ist das Mutterteil mit ausgestanzten und aufgestellten Blechlappen ausgebildet, die als Gewindeabschnitt dienen.

Beidseitig jeder kurzen Randzunge 3 sind an die Deckplatte 1 mit jeweils einem Ende zwei Außenstreben 5 eines ersten Schenkels 6 beziehungsweise eines zweiten Schenkels 7 angesetzt, die sich in einer Richtung von der Deckplatte 1 weg erstrecken. Die Außenstreben 5 sind mit ihren von der Deckplatte 1 wegweisenden Enden jeweils an einen flachen Fußabschnitt 8, 9 eines Schenkels 6, 7 angesetzt, wobei die Fußabschnitte 8, 9 schräg angestellt sind und aufeinander zu laufen. Ein Fußabschnitt 8 ist mit innen liegenden Innenzungen 10, 11 ausgebildet, die eine kleine Fußausnehmung 12 seitlich umschließen, während der andere Fußabschnitt 9 mit außenseitig der Innenzungen 10, 11 liegenden Außenzungen 13, 14 ausgestattet ist, die eine große Fußausnehmung 15 seitlich umschließen, wobei die Innenzungen 10, 11 in die große Fußausnehmung 15 hineinragen. Dadurch ist die erfindungsgemäße Steckmutter endseitig relativ kompakt ausgebildet.

Zwischen den Schenkeln 6, 7 ist somit ein Innenraum 16 vorhanden, der zwischen den Schenkeln 6, 7 seitlich sowie in Richtung der Deckplatte 1 und der Fußabschnitte 8, 9 endseitig offen ist.

An jedem Fußabschnitt 8, 9 sind mit jeweils einem Ende zwei Innenstreben 17 angesetzt, die zwischen den Außenstreben 5 liegen, in einem Abstand voneinander angeordnet sind und sich von dem jeweiligen Fußabschnitt 8, 9 in Richtung der Deckplatte 1 erstrecken. Die Innenstreben 17 laufen dabei gegenüber den Außenstreben 5 seitlich nach außen voneinander weg, so dass sie mit zunehmendem Abstand von den Fußabschnitten 8, 9 einen größeren Abstand von der dem Innenraum 16 abgewandten Außenseite der Außenstreben 5 aufweisen.

Die dem jeweiligen Fußabschnitt 8, 9 gegenüberliegenden Enden der Innenstreben 17 sind an jeweils einen Endabschnitt 18 eines Schenkels 6, 7 angesetzt. Die plattenartigen Endabschnitte 18 erstrecken sich gegenüber den Innenstreben 17 abgewinkelt in Richtung der Deckplatte 1 sowie des Innenraumes 16 und treten zwischen die seitlich benachbarten Außenstreben 5 ein. Dadurch ist die erfindungsgemäße Steckmutter auch im Bereich der Außenseite der Schenkel 6, 7 kompakt ausgebildet und als Schüttgut ohne übergroße Gefahr von Verhakungen handhabbar

An jeden Endabschnitt 18 ist jeweils eine Zunge 19 angeformt, die sich im Anformbereich von der Deckplatte 1 weg und mit ihren freien Enden abgewinkelt in Richtung des Innenraumes 16 aufeinander zu erstrecken, so dass sie im Hinblick auf eine hohe Auszugsfestigkeit der Steckmutter im Wesentlichen rechtwinklig zu den Außenstreben 5 ausgerichtet sind. Die von dem jeweiligen Endabschnitt 18 abgewandten Enden der Zungen 19 sind mit einer eingewölbten Stirnseite 20 ausgebildet, die in der in Fig. 1 dargestellten relaxierten Anordnung der Steckmutter in Verlängerung der Außenwand der Gewindehülse 4 liegen, so dass eine in der die Gewindehülse 4 eingeschraubte Schraube im wesentlichen behinderungsfrei zwischen den Zungen 17 durchtreten kann.

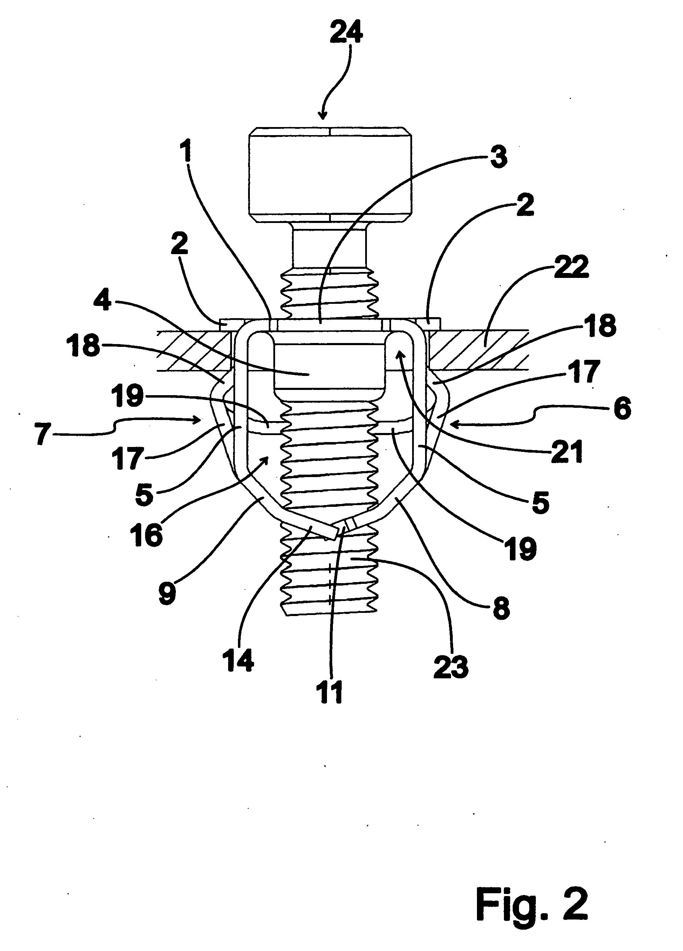

Fig. 2 zeigt in einem Längsschnitt das Ausführungsbeispiel gemäß Fig. 1 in einer in eine Ausnehmung 21 eines Trägerteiles 22 eingefügten Anordnung, wobei in die Gewindehülse 4 ein Schaft 23 einer zum Befestigen eines in Fig. 2 nicht dargestellten Anbauteiles an dem Trägerteil 22 vorgesehenen Schraube 24 so weit eingeschraubt ist, dass er über die Fußabschnitte 8, 9 hinaus über das der Deckplatte 1 abgewandten Ende der Steckmutter hinaussteht. Aus Fig. 2 ist ersichtlich, dass in dieser Anordnung die Stirnseiten 20 der Zungen 19 an dem Schaft 23 der Schraube 24 anliegen. Dadurch ist ein Einfedern der an der der Deckplatte 1 abgewandten Seite an dem Trägerteil 22 anliegenden Endabschnitte 18 blockiert, und die Auszugsfestigkeit der erfindungsgemäßen Steckmutter ist besonders hoch.

Weiterhin sei angemerkt, dass sich die ordnungsgemäße Anordnung der erfindungsgemäßen Steckmutter in der Ausnehmung 21 durch ein deutlich vernehmbares Schnappgeräusch bemerkbar macht, sobald die zunächst zwischen die Außenstreben 5 eingedrückten Innenstreben 17 durch die Ausnehmung 21 durchgetreten sowie unter Erzeugen des Schnappgeräusches wieder ausgefedert sind.

## Patentansprüche

1. Steckmutter zum Einfügen in einer Ausnehmung eines Trägerteiles (22) mit einer Deckplatte (1), an der zwei einander gegenüberliegende und sich in einer Richtung weg von der Deckplatte (1) erstreckende Schenkel (6, 7) angesetzt sind und die mit einem einen Gewindeabschnitt aufweisenden Mutterteil (4) verbunden ist, wobei zwischen den Schenkeln (6, 7) ein Innenraum (16) zur Aufnahme des Schaftes (23) einer mit dem Mutterteil (4) in Eingriff bringbaren Schraube (24) ausgebildet ist, in den an den Schenkeln (6, 7) ausgebildete Zungen (19) hineinragen, **dadurch gekennzeichnet, dass** jeder Schenkel (6, 7) zwei außenseitig angeordnete Außenstreben (5) aufweist, die jeweils mit einem Ende an der Deckplatte (1) und mit ihrem anderen Ende an einem der Deckplatte (1) gegenüberliegenden endseitigen Fußabschnitt (8, 9) des jeweiligen Schenkels (6, 7) angesetzt sind, dass zwischen den Außenstreben (5) eines Schenkels (6, 7) zwei Innenstreben (17) angeordnet sind, die mit einem Ende an dem Fußabschnitt (8, 9) angesetzt sind und sich von den Fußabschnitten (8, 9) weg in Richtung der Deckplatte (1) erstrecken sowie mit einem Endabschnitt (18) in Verbindung stehen, wobei die Innenstreben (17) seitlich nach außen über die Außenstreben (5) überstehen, dass an jeden Endabschnitt (18) ein Ende einer der in den Innenraum (16) hineinragenden Zungen (19) angeformt ist, und dass sich die Zungen (19) im Anformbereich von dem jeweiligen Endabschnitt (18) von der Deckplatte (1) weg in Richtung des jeweiligen Fußabschnittes (8, 9) des Schenkels (6, 7) erstrecken.

2. Steckmutter nach Anspruch 1, **dadurch gekennzeichnet, dass** die freien Enden der Zungen (19) rechtwinklig zu den Außenstreben (5) ausgerichtet sind.

3. Steckmutter nach Anspruch 2, **dadurch gekennzeichnet, dass** an den Stirnseiten (20) der freien Enden der Zungen (19) jeweils eine nach innen gewölbte Ausnehmung ausgebildet ist.

4. Steckmutter nach einem der Ansprüche 1 bis 3, **dadurch gekennzeichnet, dass** die Endabschnitte (18) schräg angestellt sind sowie in Richtung der Deckplatte (1) aufeinander zu laufen und zwischen seitlich benachbarten Außenstreben (5) angeordnet sind.

5. Steckmutter nach einem der Ansprüche 1 bis 4, **dadurch gekennzeichnet, dass** an den Fußabschnitten (8, 9) aufeinander zu laufende und paarweise ineinanderliegende Innenzungen (10, 11) und Außenzungen (13, 14) ausgebildet sind.

## Claims

1. Push nut for insertion into a recess of a supporting part (22), comprising a top plate (1) on which two limbs (6, 7) opposite one another and extending in a direction away from the top plate (1) are mounted and which is connected to a nut part (4) having a threaded section, an interior (16) for receiving the shaft (23) of a bolt (24) which can be made to engage the nut part (4) being formed between the limbs (6, 7), into which interior (16) tongues (19) formed on the limbs (6, 7) project, **characterized in that** each limb (6, 7) has two outer struts (5) which are arranged on the outside and which are each mounted with one end on the top plate (1) and with their other end on an end base section (8, 9) of the respective limb (6, 7), which base section is opposite the top plate (1), **in that** two inner struts (17) which are mounted with one end on the base section (8, 9) and extend away from the base sections (8, 9) in the direction of the top plate (1) and are connected to an end section (18) are arranged between the outer struts (5) of a limb (6, 7), the inner struts (17) projecting laterally outwards beyond the outer struts (5), **in that** one end of one of the tongues (19) projecting into the interior (16) is formed on each end section (18), and **in that** the tongues (19) in the attachment region extend from the respective end section (18) away from the top plate (1) in the direction of the respective base section (8, 9) of the limb (6, 7).

2. Push nut according to Claim 1, **characterized in that** the free ends of the tongues (19) are oriented at right angles to the outer struts (5).

3. Push nut according to Claim 2, **characterized in that** in each case a recess which is arched inwards is formed on the end faces (20) of the free ends of the tongues (19).

4. Push nut according to any of Claims 1 to 3, **characterized in that** the end sections (18) are inclined and approach one another in the direction of the top plate (1) and are arranged between laterally adjacent outer struts (5).

5. Push nut according to any of Claims 1 to 4, **characterized in that** inner tongues (10, 11) and outer tongues (13, 14) approaching one another and located in pairs one inside the other are formed on the base sections (8, 9).

## Revendications

1. Ecrou à pressionner destiné à être inséré dans un évidement ménagé dans un élément faisant office de support (22), comprenant une plaque supérieure (1), à laquelle sont réalisées attenantes deux pattes (6, 7) diamétralement opposées, qui s'étendent dans une direction allant en s'écartant de la plaque supérieure (1) et qui est raccordée à un fût formant écrou (4) muni d'une portion filetée, dans lequel un gabarit intérieur (16), destiné à recevoir la tige (23) d'une vis (24) devant être vissée en prise d'engagement avec le fût formant écrou (4), est défini entre les pattes (6, 7), gabarit à l'intérieur duquel des languettes (19), incorporées aux pattes (6, 7), font saillie, **caractérisé en ce que** chaque patte (6, 7) comporte deux contreforts extérieurs (5) disposés sur leur partie extérieure, qui sont respectivement réalisés attenants, par une extrémité à la plaque supérieure (1) et par leur autre extrémité à une portion d'extrémité formant pied (8, 9) de chaque patte respective (6, 7), opposée à la plaque supérieure (1), **en ce qu'**entre les contreforts extérieurs (5) d'une patte (6, 7) sont disposés deux contreforts intérieurs (17), dont une extrémité est réalisée attenante à la portion formant pied (8, 9) et qui s'étendent depuis les portion de pied (8, 9) dans la direction de la plaque supérieure (1) et qui sont également raccordées au niveau d'une portion d'extrémité (18), les contreforts intérieurs (17) étant en l'occurrence superposés dans le plan latéral vers l'extérieur aux contreforts extérieurs (5), **en ce qu'**une extrémité d'une des languettes (19) faisant saillie dans le gabarit intérieur (16) est réalisée solidaire par moulage de chaque portion d'extrémité (18) et **en ce que** les languettes (19), dans la portion de raccordement par moulage de la portion d'extrémité respective (18), vont en s'écartant de la plaque supérieure (1) dans la direction de la portion formant pied (8, 9) respective de la patte (6, 7).

2. Ecrou à pressionner selon la revendication 1, **caractérisé en ce que** les extrémités libres des languettes (19) sont orientées selon une disposition en angle droit par rapport aux contreforts extérieurs (5).

3. Ecrou à pressionner selon la revendication 2, **caractérisé en ce qu'**il est respectivement prévu, au niveau des faces antérieures (20) des extrémités libres des languettes (19), un évidement présentant une configuration bombée vers l'intérieur.

4. Ecrou à pressionner selon l'une des revendications 1 à 3, **caractérisé en ce que** les portions d'extrémité (18) ont une disposition oblique et convergent également l'une vers l'autre dans la direction de la plaque supérieure (1) et qu'elles sont disposées entre des contreforts extérieurs (5) contigus dans le plan latéral.

5. Ecrou à pressionner selon l'une des revendications 1 à 4, **caractérisé en ce que** les portions formant pied sont munies de languettes intérieures (10, 11) et de languettes extérieures (13, 14) qui convergent les unes vers les autres et qui sont respectivement imbriquées deux par deux.
